# EUROPÄISCHE PATENTSCHRIFT

(11) **EP 1 479 927 B1**
(45) Veröffentlichungstag und Bekanntmachung des Hinweises auf die Patenterteilung: **10.12.2008**
(21) Anmeldenummer: 04010660.1
(22) Anmeldetag: 05.05.2004
(51) Int. Cl.: F16C 3/035

(54) **Gleitlager einer Teleskopanordnung sowie Verfahren zu dessen Herstellung**
Sliding bearing for a telescoping system and the manufacture thereof
Palier lisse pour système télescopique et procédé pour sa fabrication

(30) Priorität: 20.05.2003 DE 10323102
(43) Veröffentlichungstag der Anmeldung: 24.11.2004
(73) Patentinhaber: SUSPA Holding GmbH, 90518 Altdorf (DE)
(72) Erfinder: Müller, Herbert, 90451 Nürnberg (DE)
(74) Vertreter: Rau, Albrecht

(56) Entgegenhaltungen:
- EP-A- 0 441 267
- WO-A-90/07065
- US-A- 3 061 887
- US-A- 5 118 204
- US-A- 5 788 379

## Beschreibung

Die Erfindung betrifft ein Gleitlager zur axialen und/oder radialen Lagerung eines ersten Lagerteils, insbesondere eines Innenrohres, gegenüber einem als zweiten Lagerteil ausgebildeten Außenrohr sowie ein Verfahren zur Herstellung des Gleitlagers.

Bei Teleskopanordnungen sind mehrere Rohre mit sukzessiv geringerem Durchmesser ineinander einschiebbar. Es ist von großer Bedeutung, dass die Rohre im wesentlichen spielfrei und entlang einer einzigen Mittellängsachse präzise geführt verschiebbar sind. Häufig führen Fertigungstoleranzen dazu, dass eine entsprechende präzise Führung nicht von vornherein gegeben ist. Ein Schleifen der entsprechenden Gleitflächen zur Erzeugung einer entsprechenden Passform scheidet aus Kostengründen aus.

Aus der US 5,788,379 ist ein Gleitlager bekannt, bei welchem die äußeren Lagerplatten zusammengesetzt und auseinander genommen werden können.

Es ist Aufgabe der vorliegenden Erfindung, ein möglichst kostengünstiges Gleitlager zu schaffen, das die Nachteile des Standes der Technik überwindet.

Die Aufgabe wird durch die Merkmale Anspruchs 1 gelöst.

Der Kern der Erfindung besteht darin, zwischen gegeneinander zu lagernden Lagerteilen ein Gleitelement vorzusehen, dessen korrekte Positionierung über eine Ausgleichsmasse erfolgt, die im Betriebszustand fest ist und vor dem Betriebszustand, insbesondere bei der Montage fließfähig war, so dass sich das Gleitelement gleichmäßig an die zugeordnete Gleitfläche anschmiegen kann. Hierbei wird die aushärtbare Ausgleichsmasse auf der Außen-Oberfläche eines ersten Lagerteils aufgebracht, auf dieser das Gleitelement angebracht und anschließend das erste Lagerteil in die Lager-Ausnehmung eines Außenrohres eingeführt.

Weitere vorteilhafte Ausgestaltungen der Erfindung ergeben sich aus den Unteransprüchen.

Zusätzliche Merkmale und Einzelheiten der Erfindung ergeben sich aus der Beschreibung von vier Ausführungsbeispielen anhand der Zeichnung. Es zeigen
- Fig. 1: einen Längsschnitt eines Gleitlagers gemäß einem ersten Ausführungsbeispiel,
- Fig. 2: einen Querschnitt gemäß der Schnittlinie II-II in Fig. 1,
- Fig. 3: einen Längsschnitt eines Gleitlagers gemäß einer nicht erfindungsgemäßen Variante des Gleitlagers,
- Fig. 4: einen Querschnitt gemäß der Schnittlinie IV-IV in Fig. 3,
- Fig. 5: einen Längsschnitt eines Gleitlagers gemäß einem zweiten Ausführungsbeispiel,
- Fig. 6: einen Querschnitt gemäß der Schnittlinie VI-VI in Fig. 5,
- Fig. 7: einen Längsschnitt eines Gleitlagers gemäß einem dritten Ausführungsbeispiel und
- Fig. 8: einen Querschnitt gemäß der Schnittlinie VIII-VIII in Fig. 7.

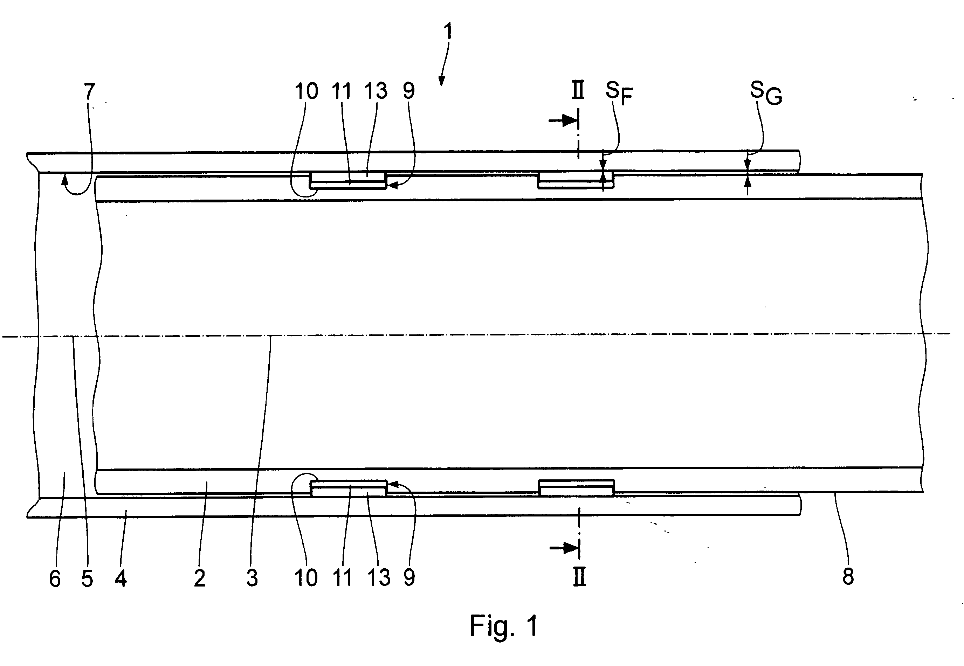

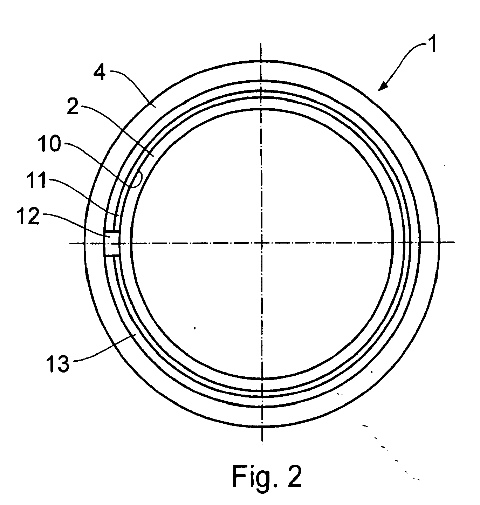

Im folgenden wird unter Bezugnahme auf die Fig. 1 und 2 ein erstes Ausführungsbeispiel der Erfindung beschrieben. Ein Gleitlager 1 weist ein als erstes Lagerteil ausgebildetes Innenrohr 2 mit einer zugehörigen Mittel-Längs-Achse 3 sowie ein als zweites Lagerteil ausgebildetes Außenrohr 4 mit einer zugehörigen Mittel-Längs-Achse 5, welche mit der Achse 3 zusammenfällt, auf. Das Gleitlager 1 gestattet eine axiale und/oder radiale Lagerung des Innenrohrs 2 gegenüber dem Außenrohr 4. Die Rohre 2 und 4 können Bauteile einer Teleskopeinheit von mehreren sukzessiv ineinander angeordneten Rohren sein, die beispielsweise durch einen Spindelantrieb relativ zueinander verschiebbar sind.

Das Außenrohr 4 umschließt einen zylindrischen, endseitig offenen Innenraum 6 und weist auf seiner Innenseite eine Gleit-Fläche 7 auf. Das konzentrisch zum Außenrohr 4 in diesem angeordnete Innenrohr 2 weist auf seiner Außen-Oberfläche eine zylindrische Gleit-Fläche 8 auf. Zwischen den Gleit-Flächen 7 und 8 besteht ein Spiel S_{G}, das groß genug ist, damit das Innenrohr 2 ohne weiteres in das Außenrohr 4 geschoben werden kann. Auch wenn die Gleit-Flächen 7 und 8 im wesentlichen parallel zueinander verlaufen, so können jedoch Fertigungstoleranzen zu geringen Schwankungen führen.

Das Innenrohr 2 weist axial zueinander versetzt mindestens eine, wie in Fig. 1 dargestellt zwei, und vorteilhafterweise mehrere umlaufende Ringnuten 9 auf, deren axiale Erstreckung größer, insbesondere wesentlich größer, ist als deren radiale Tiefe. Am Grund 10 der Ringnut 9 befindet sich eine Ausgleichsmasse 11, die nachfolgend im Zusammenhang mit der Beschreibung der Herstellung des Gleitlagers genauer beschrieben wird. Auf der Ausgleichsmasse 11 befindet sich ein das Innenrohr 2 mit Ausnahme eines Ausgleichsspaltes 12 umgebendes, als Gleit-/Führungs-Element ausgebildetes Gleitband 13. Dieses in der Ringnut 9 angeordnete Gleitband 13 steht radial gegenüber dem oberen Rand der Ringnut 9 und damit der Gleit-Fläche 8 hervor und liegt flächig und gleichmäßig an der Gleit-Fläche 7 an. Um eine gut geführte und möglichst reibungsfreie Verschiebbarkeit des Innenrohres 2 im Außenrohr 4 zu ermöglichen, kann zwischen der Außenfläche des Gleitbandes 13 und der Gleit-Fläche 7 ein sehr geringes gleichmäßiges Führungsspiel S_{F} vorgesehen sein. Das Gleitband 13 besteht aus einem gut gleitfähigen Material, insbesondere aus Kunststoff. Besonders bevorzugt ist beispielsweise Teflon oder ein mit Bronzepartikeln versetzter Kunststoff. Die Ausgleichsmasse 11 ist ein Klebstoff zur Festlegung des Gleitbandes 13 in der zugehörigen Ringnut 9. Es ist auch möglich, als Ausgleichsmasse 11 eine Füllmasse zu verwenden, die keine Klebewirkung besitzt. In diesem Fall wird das Gleitband 13 in der in Fig. 1 dargestellten Position nur durch die Ringnut 9 und die gegenüberliegende Gleit-Fläche 7 gehalten. Bei der Ausführungsform gemäß Fig. 1 wirkt das Gleitlager 1 sowohl als radiales als auch als axiales Lager.

Es ist auch möglich, das Gleitband 13 direkt auf dem Innenrohr 2 ohne entsprechende Ringnuten zu befestigen. Es ist ferner möglich, dass sich die Ringnuten in axialer Richtung nur über einen Teil der axialen Länge des Gleitbandes 13 erstrecken und nur die überschüssige Ausgleichsmasse 11 aufnehmen. Es ist ausreichend, wenn die Gleit-Fläche 7, an der das Gleitband 13 gleitend anliegt, eine geringe Oberflächenrauhigkeit aufweist. Die Gleit-Fläche 8 kann eine rauhere Oberfläche besitzen. Sie darf nur lediglich nicht an die gegenüberliegende Gleit-Fläche 7 anstoßen. Allgemein gilt, dass lediglich die Gleit-Fläche, an der das Gleitband 13 gleitend anliegt, besonders glatt ausgebildet zu sein braucht. Für die jeweils andere Gleit-Fläche gilt dies nicht.

Im folgenden wird die Herstellung und Funktionsweise des Gleitlagers 1 beschrieben. Auf dem mit Ringnuten 9 versehenen Innenrohr 2, das sich vor der Montage nicht im Außenrohr 4 befindet, wird auf dem Grund 10 der Ringnuten 9 eine fließfähige pastöse Ausgleichsmasse 11 aufgebracht. Bei der Ausgleichsmasse 11 kann es sich um einen aushärtbaren Klebstoff oder ein aushärtbares Kunstharz handeln. Grundsätzlich sind auch aushärtbare Massen verwendbar, die keine Klebwirkung besitzen. Es wird dabei überschüssige Ausgleichsmasse 11 aufgebracht. Anschließend wird auf die Ausgleichsmasse 11 jeweils ein Gleitband 13 aufgebracht, so dass dieses das Innenrohr 2 bis auf einen Ausgleichsspalt 12 umschließt. Durch die überschüssige Ausgleichsmasse 11 steht das Gleitband 13 in radialer Richtung mehr hervor, als dies in Fig. 1 dargestellt ist. Anschließend wird das Außenrohr 4 auf das entsprechend vorbereitete Innenrohr 2 geschoben, wobei das jeweilige Gleitband 13 soweit radial nach innen gedrückt wird, so dass dieses gleichmäßig und flächig an der Gleit-Fläche 7 des Außenrohres 4 anliegt. Die überschüssige Ausgleichsmasse 11 wird in den Ausgleichsspalt 12 gedrückt. Es ist auch möglich, dass die Ausgleichsmasse 11 im Bereich der Ränder der Ringnut 9 nach außen tritt. Zum Zusammenfügen der beiden Rohre 2 und 4 wird ein Dorn verwendet, der die gewünschte Lage der Rohre 2 und 4 zueinander festlegt. Nach dem Aushärten der Ausgleichsmasse 11 ist eine genaue Passung der Gleitbänder 13 gegenüber der zugehörigen Gleit-Fläche 7 hergestellt, so dass die Rohre 2, 4 passgenau ineinander verschiebbar sind.

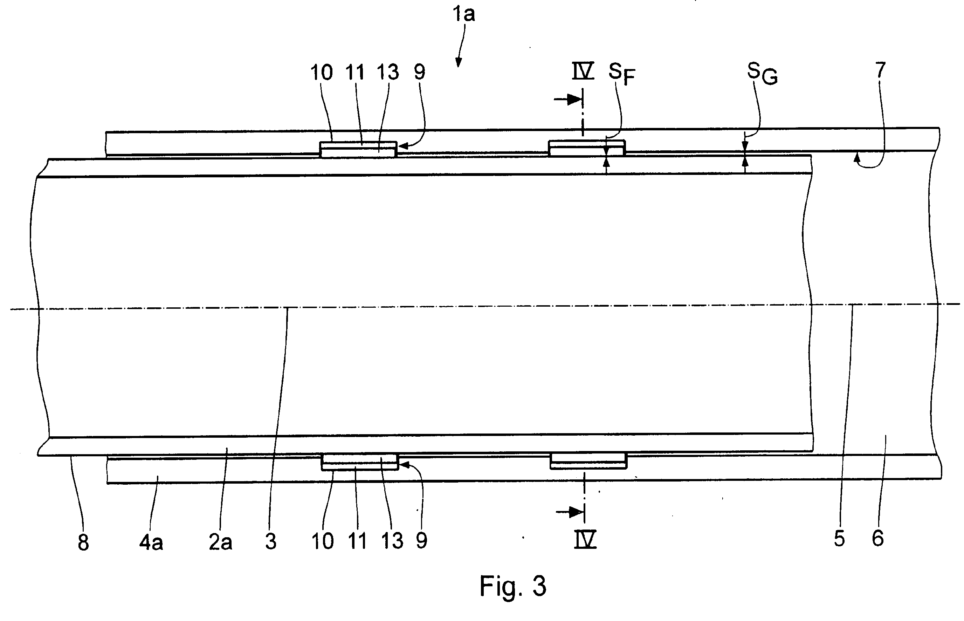

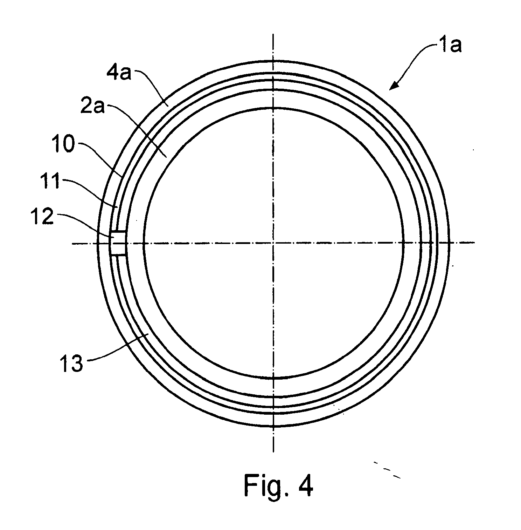

Im folgenden wird unter Bezugnahme auf die Fig. 3 und 4 eine nicht erfindungsgemäße Variante des Gleitlagers beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass die Ringnuten 9 nicht auf dem Innenrohr 2, sondern auf der Innenseite des Außenrohres 4a vorgesehen sind, so dass auch die Gleitbänder 13 an der Innenseite des Außenrohres 4a befestigt sind und somit an der Gleit-Fläche 8 des Innenrohres 2a gleitend anliegen. Hinsichtlich der Herstellung und der Funktionsweise des Gleitlagers 1a wird ansonsten auf die Erläuterung zum ersten Ausführungsbeispiel verwiesen.

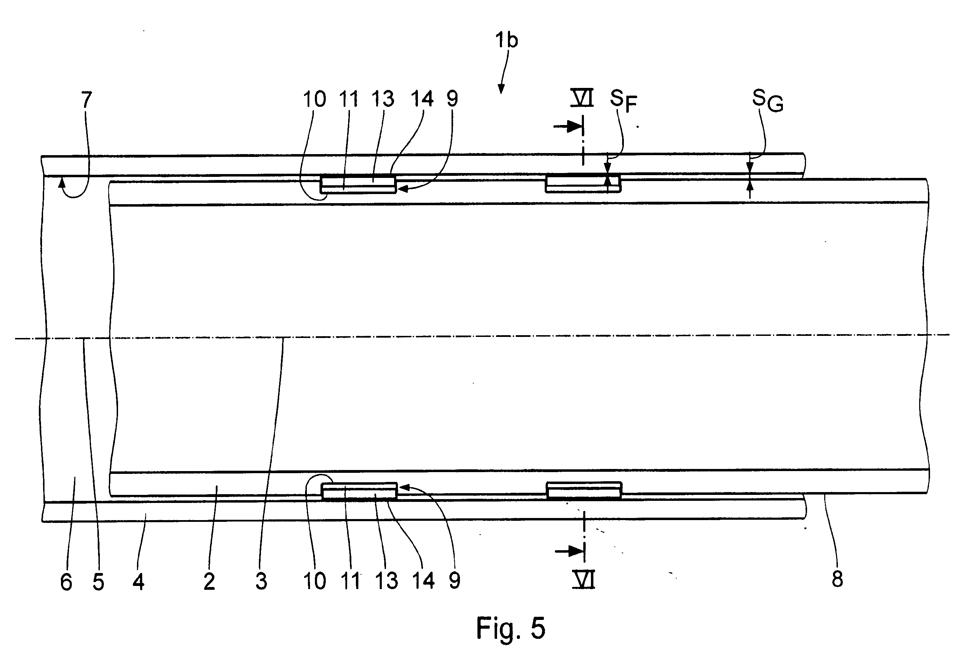

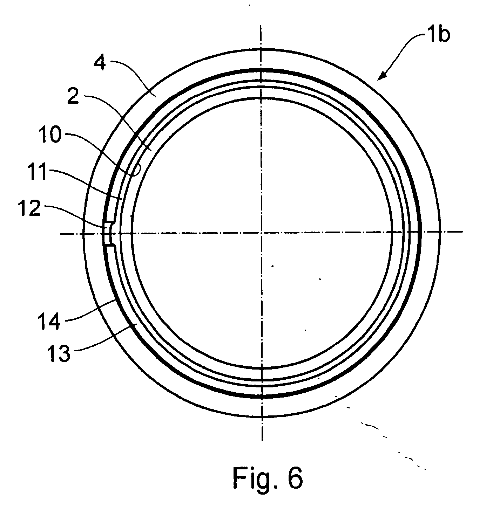

Im folgenden wird unter Bezugnahme auf die Fig. 5 und 6 ein zweites Ausführungsbeispiel der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b. Das Gleitlager 1b weist im wesentlichen denselben Aufbau auf wie das Gleitlager gemäß dem ersten Ausführungsbeispiel. Die Gleitbänder 13 sind mit dem Innenrohr 2 verbunden. Bei der Herstellung weisen die Gleitbänder 13 auf ihrer Außenseite eine abziehbare Folie 14 auf. Bei dem Zusammenfügen des Innenrohres 2 mit der noch fließfähigen Ausgleichsmasse 11 wird das Innenrohr 2 mit den Gleitbändem 13 und den darauf befindlichen Folien 14 in das Außenrohr 4 geschoben, wie dies in Fig. 5 dargestellt ist. Nach dem Aushärten der Ausgleichsmasse 11 wird das Innenrohr 2 wieder aus dem Außenrohr 4 herausgezogen und die Folien 14 entfernt. Für den normalen Betrieb wird dann das Innenrohr 2 wieder in das Außenrohr 4 eingeschoben, wobei nun zwischen der Außenseite der Gleitbänder 13 und der zugehörigen Gleit-Fläche 7 ein geringfügiges, für ein möglichst reibungsfreies Verschieben erforderliches Führungsspiel S_{F}, das der Dicke der Folie entspricht, vorliegt. Insofern zeigt Fig. 5 nicht den endgültigen Betriebszustand des Gleitlagers 1b, sondern einen Zwischenzustand bei der Fertigung des Gleitlagers 1b, bei dem die Folie 14 noch vorhanden ist.

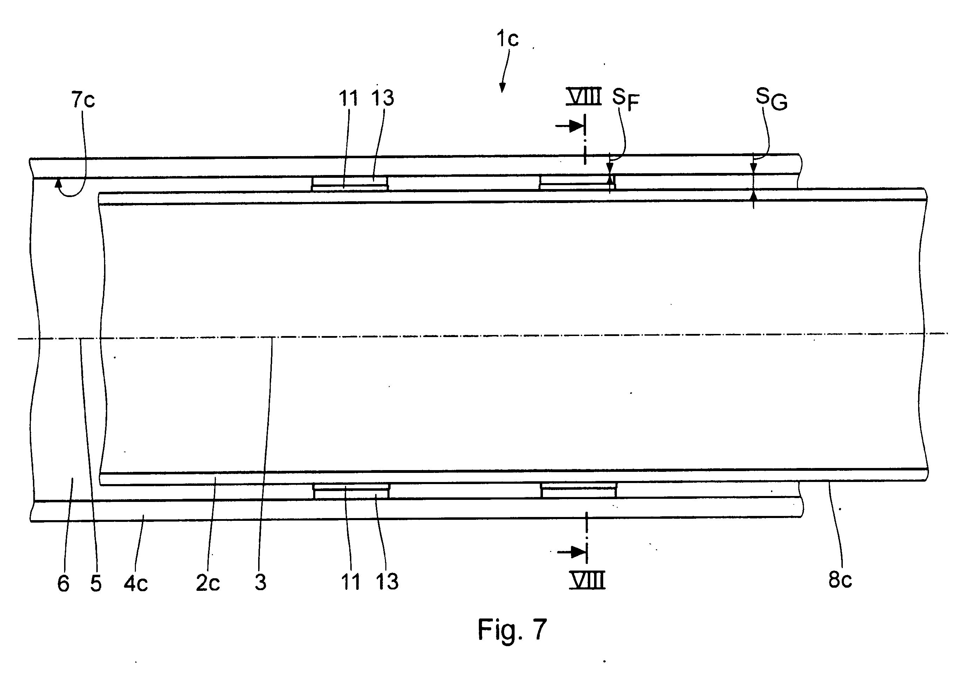

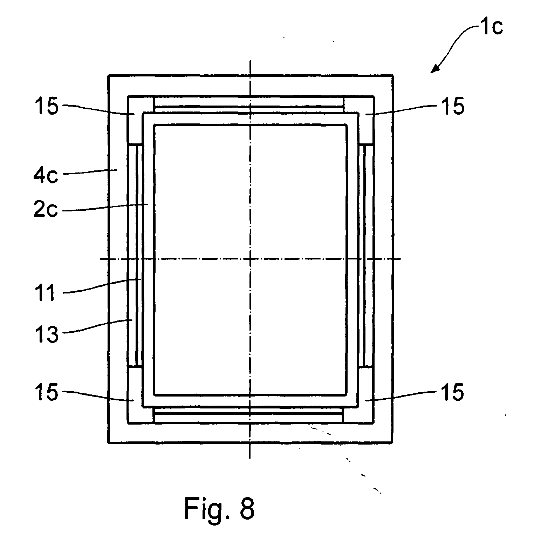

Im folgenden wird unter Bezugnahme auf die Fig. 7 und 8 ein drittes Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c. Das Außenrohr 4c und das Innenrohr 2c weisen einen in Fig. 8 dargestellten rechteckigen Querschnitt auf. Es ist auch möglich, andere unrunde Querschnitte, zum Beispiel elliptische Querschnitte vorzusehen, um eine Verdrehfestigkeit der beiden Rohre 2c, 4c zueinander zu erreichen. Das Innenrohr 2c weist vier Gleit-Flächen 7c auf, auf denen jeweils im wesentlichen über die volle Breite der jeweiligen Gleit-Fläche 7c Ausgleichmasse 11 und ein darauf befindliches Gleitband 13 vorgesehen sind. In dem Eckbereich 15 des Innenrohres 2c ist kein Gleitband 13 vorgesehen. Die Eckbereiche 15 dienen als Ausgleichsräume für überschüssige Ausgleichsmasse 11. Anders als bei dem ersten Ausführungsbeispiel sind die Gleitbänder 13 bei dem vierten Ausführungsbeispiel nicht in Ringnuten 9 untergebracht. Dies ist jedoch möglich. Durch den unrunden Querschnitt der Rohre 2c und 4c wird erreicht, dass diese nur axial verschiebbar sind, nicht jedoch radial.

## Patentansprüche

1. Gleitlager zur axialen und/oder radialen Lagerung eines ersten Lagerteils (2; 2c) gegenüber einem zweiten Lagerteil (4; 4c)
a. mit einem als zweites Lagerteil (4; 4c) ausgebildeten Außenrohr mit einer Lager-Ausnehmung (6), welche eine zweite Gleit-Fläche (7; 7c) aufweist,
b. mit einem in der Lager-Ausnehmung (6) aufgenommenen, axial und/oder radial gelagerten ersten Lagerteil (2; 2c),
i. welches auf seiner Außen-Oberfläche eine der zweiten Gleit-Fläche (7; 7c) gegenüberliegende, mit einem Spiel S_{G} beabstandete erste Gleit-Fläche (8; 8c) aufweist,
c. mit mindestens einem zwischen dem ersten und dem zweiten Lagerteil (2, 4; 2c, 4c) angeordneten Gleit-/Führungs-Element (13) zur Führung einer Bewegung des ersten gegenüber dem zweiten Lagerteil (2, 4; 2c, 4c), **dadurch gekennzeichnet, dass** das Gleit-/Führungs-Element (13) gegenüber dem ersten Lagerteil (2; 2c) festgelegt ist und dass eine Ausgleichmasse (11)
zwischen dem mindestens einen Gleit-/Führungs-Element (13) und dem ersten Lagerteil (2; 2c), gegenüber dem das mindestens eine Gleit-/Führungs-Element (13) festgelegt ist, zur Anpassung des Führungs-Spiels S_{F} zwischen dem mindestens einen Gleit-/Führungs-Element (13) und der relativ zu diesem verschiebbaren Gleit-Fläche (7; 7c) angeordnet ist, wobei die Ausgleichmasse (11) im Betriebszustand des Gleitlagers fest ist.

2. Gleitlager gemäß Anspruch 1, **dadurch gekennzeichnet, dass** das zweite Rohr einen runden Querschnitt oder einen unrunden Querschnitt, insbesondere einen rechteckigen Querschnitt aufweist.

3. Gleitlager gemäß Anspruch 1 oder 2, **dadurch gekennzeichnet, dass** das erste Lagerteil (2; 2c) als erstes Rohr ausgebildet ist.

4. Gleitlager gemäß Anspruch 3, **dadurch gekennzeichnet, dass** der Querschnitt des ersten Rohres dem Querschnitt des zweiten Rohres angepasst ist, sodass zwischen dem ersten Rohr und dem zweiten Rohr ein Spiel S_{G} besteht.

5. Gleitlager gemäß einem der vorangehenden Ansprüche, **dadurch gekennzeichnet, dass** das Gleit-/Führungs-Element (13) als Gleitband (13) ausgebildet ist.

6. Gleitlager gemäß Anspruch 5, **dadurch gekennzeichnet, dass** das Gleitband (13) einen im wesentlichen rechteckigen Querschnitt aufweist.

7. Gleitlager gemäß Anspruch 5 oder 6, **dadurch gekennzeichnet, dass** das Gleitband (13) das erste Lagerteil (2; 2c) zumindest teilweise, insbesondere unter Bildung mindestens eines Ausgleichsspalts (12) umgibt.

8. Gleitlager gemäß einem der Ansprüche 5 bis 7, **dadurch gekennzeichnet, dass** das Gleitband (13) aus einem Kunststoff, insbesondere aus Teflon oder einem mit Bronze versetzten Kunststoff besteht.

9. Gleitlager gemäß einem der Ansprüche 5 bis 8, **dadurch gekennzeichnet, dass** das Gleitband (13) in einer Ringnut (9) festgelegt ist.

10. Verfahren zur Herstellung eines Gleitlagers umfassend die folgenden Schritte:
a. Bereitstellen eines Außenrohres (4; 4c) mit einer Lagerausnehmung (6), welche eine zweite Gleit-Fläche (7; 7c) aufweist, und eines in der Lager-Ausnehmung (6) aufnehmbaren ersten Lagerteils (2; 2c), welches auf seiner Außen-Oberfläche eine der zweiten Gleit-Fläche (7; 7c) zugeordnete erste Gleit-Fläche (8; 8c) aufweist,
b. Aufbringen einer bei der Verarbeitung fließfähigen und aushärtbaren Ausgleichsmasse (11) entlang mindestens eines Teilabschnitts der ersten Gleit-Fläche (8; 8c),
c. Anbringen mindestens eines Gleitbandes (13) auf der Ausgleichsmasse (11),
d. anschließendes Einführen des ersten Lagerteils (2; 2c) in die Lager-Ausnehmung (6) des Außenrohres (4; 4c), sodass das mindestens eine Gleitband (13) an der zweiten Gleit-Fläche (7; 7c) gleichmäßig und flächig anliegt und die überschüssige Ausgleichsmasse (11) in hierfür vorgesehene Ausgleichs-Bereiche (12) gedrückt wird,
e. Aushärtenlassen der Ausgleichsmasse (11).

11. Verfahren gemäß Anspruch 10, **dadurch gekennzeichnet, dass** das Gleitband (13) aus einem Kunststoff, insbesondere aus Teflon oder einem mit Bronze versetzten Kunststoff besteht.

12. Verfahren gemäß einem der Ansprüche 10 oder 11, **dadurch gekennzeichnet, dass** das mindestens eine auf die Ausgleichsmasse (11) aufgebrachte Gleitband (13) an seiner Außenseite eine abziehbare Folie (14) aufweist und dass nach dem Aushärten der Ausgleichsmasse (11) das erste Lagerteil (2c) aus der Lagerausnehmung (6) genommen wird und die Folie (14) entfernt wird, wodurch ein vorbestimmtes Führungsspiel S_{F} zwischen der Außenseite des mindestens einen Gleitbandes (13) und der zweiten Gleitfläche (7c) entsteht und/oder ein Anhaften der überschüssigen Ausgleichsmasse (11) auf der Gleitfläche (7c) verhindert wird.

13. Verfahren gemäß einem der Ansprüche 10 bis 12, **dadurch gekennzeichnet, dass** zum Einschieben des ersten Lagerteils (2; 2c) in das Außenrohr (4; 4c) eine Positioniervorrichtung verwendet wird, die das erste Lagerteil (2; 2c) relativ zum Außenrohr (4; 4c) in einer vorbestimmten Position hält, bis die Ausgleichsmasse (11) ausgehärtet ist.

## Claims

1. Sliding bearing for axial and/or radial arrangement of a first bearing member (2; 2c) in relation to a second bearing member (4; 4c), comprising
a. an exterior pipe which is configured as a second bearing member (4, 4c) and has a bearing recess (6) provided with a second slide face (7; 7c);
b. a first bearing member (2; 2c), which is lodged in the bearing recess (6) and which is mounted axially and/or radially,
i. the first bearing member (2; 2c) having a first slide face (8; 8c) on its outer surface, which first slide face (8; 8c) is opposite to the seconds slide face (7; 7c) and spaced therefrom by a clearance S_{G};
c. at least one sliding/guiding element (13), which is disposed between the first and the second bearing member (2, 4; 2c, 4c), for guidance of a motion of the first relative to the second bearing member (2, 4; 2c, 4c), **characterized in that** the sliding/guiding element (13) is fixed in relation to the first bearing member (2; 2c), and **in that** an equalizing compound (11) is disposed between the at least one sliding/guiding element (13) and the first bearing member (2; 2c) relative to which is fixed the at least one sliding/guiding element (13), for adaptation of the guide clearance S_{F} between the at least one sliding/guiding element (13) and the slide face (7; 7c) that is displaceable in relation thereto, the equalizing compound (11) being solid in the operating state of the sliding bearing and free-flowing prior thereto.

2. Sliding bearing according to claim 1, **characterized in that** the second pipe has a circular cross-sectional shape or a non-circular cross-sectional shape, in particular a rectangular cross-sectional shape.

3. Sliding bearing according to claim 1 or 2, **characterized in that** the first bearing member (2; 2c) is a first pipe.

4. Sliding bearing according to claim 3, **characterized in that** the cross-sectional shape of the first pipe is adapted to the cross-sectional shape of the second pipe so that a clearance S_{G} exists between the first pipe and the second pipe.

5. Sliding bearing according to one of the preceding claims, **characterized in that** the sliding/guiding element (13) is a sliding band (13).

6. Sliding bearing according to claim 5, **characterized in that** the sliding band (13) has a substantially rectangular cross-sectional shape.

7. Sliding bearing according to claim 5 or 6, **characterized in that** the sliding band (13) encircles the first bearing member (2; 2c) at least partially, in particular forming at least one equalizing gap (12).

8. Sliding bearing according to one of claims 5 to 7, **characterized in that** the sliding band (13) consists of plastics, in particular of Teflon or plastics mixed with bronze.

9. Sliding bearing according to one of claims 5 to 8, **characterized in that** the sliding band (13) is arranged in an annular groove (9).

10. Method of manufacturing a sliding bearing, comprising the following steps:
a. providing an exterior pipe (4; 4c)with a bearing recess (6) that comprises a second slide face (7; 7c), and a first bearing member (2; 2c) which is insertable in the bearing recess (6), having a first slide face (8; 8c) on its outer surface, which first slide face (8; 8c) is allocated to the second slide face (7; 7c);
b. applying a curable equalizing compound (11), which is free-flowing when worked, to at least a section of the first slide face (8; 8c);
c. placing at least one sliding band (13) on the equalizing compound (11);
d. subsequently inserting the first bearing member (2; 2c) into the bearing recess (6) of the exterior pipe (4; 4c) so that the at least one sliding band (13) rests uniformly and planely on the second slide face (7; 7c) and the excess equalizing compound (11) is squeezed into equalizing areas (12) that are provided therefor;
e. curing the equalizing compound (11).

11. Method according to claim 10, **characterized in that** the sliding band (13) consists of plastics, in particular of Teflon or plastics mixed with bronze.

12. Method according to one of claims 10 or 11, **characterized in that** the at least one sliding band (13) applied to the equalizing compound (11) comprises a detachable film (14) on its outside; and **in that** after curing of the equalizing compound (11), the first bearing member (2c) is withdrawn from the bearing recess (6) and the film (14) is removed, whereby a pre-determined guide clearance S_{F} is produced between the outside of the at least one sliding band (13) and the second slide face (7c) and/or the excess equalizing compound (11) is prevented from adhering to the slide face (7c).

13. Method according to one of claims 10 to 12, **characterized in that** for insertion of the first bearing member (2; 2c) into the exterior pipe (4; 4c), use is made of a positioning device which holds the first bearing member (2; 2c) in a pre-determined position relative to the exterior pipe (4; 4c) until the equalizing compound (11) has cured.

## Revendications

1. Palier lisse destiné au logement axial et/ou radial d'une première partie de palier (2 ; 2c) par rapport à une seconde partie de palier (4 ; 4c)
a. comprenant un tube extérieur, réalisé comme la seconde partie de palier (4 ; 4c), doté d'un évidement de palier (6), lequel comprend une seconde surface de glissement (7 ; 7c),
b. comprenant une première partie de palier (2 ; 2c) logée de manière axiale et/ou radiale, reçue dans l'évidement de palier (6),
i. laquelle comprend sur sa surface extérieure une première surface de glissement (8 ; 8c) opposée à la seconde surface de glissement (7 ; 7c) et distante d'un jeu S_{G},
c. comprenant au moins un élément de guidage/de glissement (13) disposé entre la première et la seconde parties de palier (2, 4 ; 2c, 4c), destiné à guider un déplacement de la première partie de palier par rapport à la seconde partie de palier (2, 4 ; 2c, 4c),
**caractérisé en ce que** l'élément de glissement/de guidage (13) est fixé par rapport à la première partie de palier (2 ; 2c) et **en ce qu'**une masse de compensation (11) est disposée entre le au moins un élément de glissement/de guidage (13) et la première partie de palier (2 ; 2c), par rapport à laquelle le au moins un élément de glissement/de guidage (13) est fixé, pour adapter le jeu de guidage S_{F} entre le au moins un élément de glissement/de guidage (13) et la surface de glissement (7 ; 7c) mobile par rapport à celui-ci,
la masse de compensation (11) étant fixe lorsque le palier lisse fonctionne.

2. Palier lisse selon la revendication 1, **caractérisé en ce que** le second tube comprend une section transversale ronde ou une section transversale non ronde, en particulier une section transversale rectangulaire.

3. Palier lisse selon la revendication 1 ou 2, **caractérisé en ce que** la première partie de palier (2 ; 2c) est réalisée comme un premier tube.

4. Palier lisse selon la revendication 3, **caractérisé en ce que** la section transversale du premier tube est adaptée à la section transversale du second tube, de sorte qu'il existe un jeu S_{G} entre le premier tube et le second tube.

5. Palier lisse selon l'une quelconque des revendications précédentes, **caractérisé en ce que** l'élément de glissement/de guidage (13) est réalisé comme une bande de glissement (13).

6. Palier lisse selon la revendication 5, **caractérisé en ce que** la bande de glissement (13) comprend une section transversale sensiblement rectangulaire.

7. Palier lisse selon la revendication 5 ou 6, **caractérisé en ce que** la bande de glissement (13) entoure la première partie de palier (2 ; 2c) au moins en partie, en particulier en formant au moins un espace de compensation (12).

8. Palier lisse selon l'une quelconque des revendications 5 à 7, **caractérisé en ce que** la bande de glissement (13) est constituée d'une matière plastique, en particulier de téflon ou d'une matière plastique mélangée à du bronze.

9. Palier lisse selon l'une quelconque des revendications 5 à 8, **caractérisé en ce que** la bande de glissement (13) est fixée dans une rainure annulaire (9).

10. Procédé de fabrication d'un palier lisse comportant les étapes suivantes consistant à :
a. mettre à disposition un tube extérieur (4 ; 4c) doté d'un évidement de palier (6), lequel comprend une seconde surface de glissement (7 ; 7c), et une première partie de palier (2 ; 2c) pouvant être reçue dans l'évidement de palier (6), laquelle comprend sur sa surface extérieure une première surface de glissement (8 ; 8c) associée à la seconde surface de glissement (7 ; 7c),
b. appliquer une masse de compensation (11) coulante et durcissable lors du traitement le long d'au moins une section partielle de la première surface de glissement (8 ; 8c),
c. agencer au moins une bande de glissement (13) sur la masse de compensation (11),
d. introduire par la suite la première partie de palier (2 ; 2c) dans l'évidement de palier (6) du tube extérieur (4 ; 4c), de sorte que la au moins une bande de glissement (13) repose uniformément et à plat contre la seconde surface de glissement (7 ; 7c) et que l'excédent de masse de compensation (11) est pressé dans des zones de compensation (12) prévues pour cela,
e. laisser durcir la masse de compensation (11).

11. Procédé selon la revendication 10, **caractérisé en ce que** la bande de glissement (13) est constituée d'une matière plastique, en particulier de téflon ou d'une matière plastique mélangée à du bronze.

12. Procédé selon l'une quelconque des revendications 10 ou 11, **caractérisé en ce que** la au moins une bande de glissement (13) appliquée sur la masse de compensation (11) comprend sur sa face extérieure une feuille détachable (14) et **en ce qu'**après le durcissement de la masse de compensation (11), la première partie de palier (2c) est prélevée de l'évidement de palier (6) et la feuille (14) est retirée, un jeu de guidage prédéfini S_{F} étant établi entre la face extérieure de la au moins une bande de glissement (13) et la seconde surface de glissement (7c) et/ou une adhérence de l'excédent de masse de compensation (11) sur la surface de glissement (7c) étant empêchée.

13. Procédé selon l'une quelconque des revendications 10 à 12, **caractérisé en ce que** pour introduire la première partie de palier (2 ; 2c) dans le tube extérieur (4 ; 4c), on utilise un dispositif de positionnement qui maintient la première partie de palier (2 ; 2c) par rapport au tube extérieur (4 ; 4c) dans une position prédéfinie jusqu'à ce que la masse de compensation (11) ait durci.
